# EUROPÄISCHE PATENTSCHRIFT

(11) **EP 2 024 110 B1**
(45) Veröffentlichungstag und Bekanntmachung des Hinweises auf die Patenterteilung: **19.06.2013**
(21) Anmeldenummer: 07724093.5
(22) Anmeldetag: 07.04.2007
(51) Int. Cl.: B21B 38/04, B21B 37/22, B21B 37/68

(54) **VORRICHTUNG ZUM MESSEN DER BREITE UND/ODER DER BANDLAGE EINES METALLBANDES ODER EINER BRAMME**
DEVICE FOR MEASURING THE WIDTH AND/OR THE POSITION OF A METAL STRIP OR SLAB
DISPOSITIF DE MESURE DE LA LARGEUR ET/OU DE LA POSITION D'UNE BANDE MÉTALLIQUE OU D'UNE BRAME

(30) Priorität: 27.05.2006 DE 102006024761
(43) Veröffentlichungstag der Anmeldung: 18.02.2009
(73) Patentinhaber: SMS Siemag AG, 40237 Düsseldorf (DE)
(72) Erfinder: JEPSEN, Olaf, Norman, 57072 Siegen (DE); FRANZ, Rolf, 57223 Kreuztal (DE); TUSCHHOFF, Matthias, 57072 Siegen (DE); KIPPING, Matthias, 57562 Herdorf (DE)
(74) Vertreter: Klüppel, Walter
(86) Internationale Anmeldenummer: PCT/EP2007/003152
(87) Internationale Veröffentlichungsnummer: WO 2007/137649

(56) Entgegenhaltungen:
- DE-A1- 3 116 278
- GB-A- 795 525
- GB-A- 2 138 180
- US-A- 2 552 459
- US-A- 2 779 549

## Beschreibung

Die Erfindung betrifft eine Vorrichtung zum Messen der Breite und/oder der Bandlage eines Metallbandes oder einer Bramme, die mindestens zwei Messsysteme aufweist, von denen je eines an einer Seite des Metallbandes oder der Bramme angeordnet ist, wobei jedes Messsystem einen Sensor aufweist, der zur Erfassung des seitlichen Endes des Metallbandes oder der Bramme ausgebildet ist, wobei der Sensor auf einem Bewegungselement angeordnet ist, mit dem er translatorisch in eine Richtung quer zur Längsrichtung des Metallbandes bewegt werden kann, und wobei mindestens ein Linear-Aktuator vorgesehen ist der das Bewegungselement bewegt. Die Breitenmessung von Bändern erfolgt häufig berührungslos, z. B. optisch durch Fotozellen oder Kameras, die senkrecht oberhalb des Bandes und insbesondere der Bandkante angeordnet sind. Eine andere Möglichkeit zur Ermittlung des seitlichen Endes eines Metallbandes bzw. einer Bramme ist diejenige über Radiometrie. Ebenfalls ist die mechanische Vermessung mittels einer Messrolle bekannt, deren Auslenkung quer zur Längsrichtung des Metallbandes bzw. der Bramme ermittelt wird. Vermessen werden sowohl Bänder in Kaltwalzwerken als auch in Warmwalzwerken.

Eine besondere Bedeutung hat die Breitenmessung des Bandes bzw. der Bramme vor dem Stauchprozess in einer konventionellen Warmbandstrasse. Die Breite des Bandes bzw. der Bramme ist hier die Eingangsgröße für die Breitenregelung. Eine funktionierende Breitenregelung ist wiederum eine maßgebliche Größe für die geometrische Qualität des Warmbandes und hat somit auch einen entsprechenden Einfluss auf die Wirtschaftlichkeit einer Warmbandstra-βe.

Eine Vorrichtung der gattungsgemäßen Art ist beispielsweise aus der GB 2 138 180 A bekannt. Dort passiert ein zu walzendes Metallband ein Walzgerüst, wobei beiderseits der seitlichen Ränder des Metallbandes Sensoren angeordnet sind, die die Lage der seitlichen Bandkanten ermitteln. Diese Sensoren sind nach einer Ausgestaltung ortsfest angeordnet, wobei mittels eines optischen Systems die seitliche Kante des Metallbandes detektiert wird. Gemäß einer anderen Ausgestaltung ist vorgesehen, dass eine Rolle seitlich am Rand des Bandes anliegt, wobei diese in Richtung quer zur Längsachse des Metallbandes gegen die Kraft einer Feder beweglich angeordnet ist. Die Auslenkung der Rolle wird dabei gemessen und so auf die Position der Lage des seitlichen Endes des Metallbandes geschlossen. Im Zusammenwirken zweier derartiger Messsysteme kann die Breite des Bandes ermittelt werden.

Eine andere Lösung ist aus der DE 31 16 278 A1 bekannt. Dort ist beiderseits des Metallbandes eine Rolle vorgesehen, die an der Bandkante anläuft. Die Rolle ist an einem elastischen Arm angeordnet, der eine Auslenkung der Rolle in Richtung quer zur Längsachse des Metallbandes zulässt. An dem elastischen Arm sind Dehnmessstreifen befestigt, so dass bei Auslenkung des Arms auf die Auslenkung der Rolle und somit mittels zweier derartiger Messsysteme auf die Bandbreite geschlossen werden kann.

Ähnliche Lösungen offenbaren die US-A 2 779 549 und die GB 795 525 A. Auch die US-A 2 552 459 beschäftigt sich mit der in Rede stehenden Technologie.

Die EP 0 166 981 B1 beschreibt eine Positioniersteuerungseinrichtung für Führungslineale bzw. Führungsrollen, die quer zur Walzrichtung eines Metallbandes bzw. einer Bramme verschiebbar angeordnet sind. Die Verschiebung der Führungsleiste bzw. der Führungsrolle erfolgt in geregelter Weise.

Eine andere Lösung zur Einstellung seitlicher Führungselemente für ein Metallband in einer Walzvorrichtung ist aus der EP 0 925 854 A2 bekannt. In den Führungselementen sind hier Sensoren integriert, die den Abstand des Führungselements von der Bandkante messen können. Eine ähnliche Lösung ist aus der JP 6110 8415 A bekannt.

Nach der EP 1 125 658 A1 werden ortsfest angeordnete Abstandssensoren eingesetzt, um die Lage der Bandkante eines stranggegossenen Metallbandes bzw. einer Bramme zu ermitteln.

Sensoren zur Messung der Dicke des gewalzten Bandes bzw. der Bramme in einer Walzvorrichtung sind aus der JP 6319 4804 A bekannt, wobei hier Messrollen auf der Oberseite und Unterseite des gewalzten Produkts anliegen. Auch aus der JP 6319 4803 A ist es bekannt, derartige Messrollen einzusetzen.

Durch die JP 6301 0017 A ist es bekannt geworden, dass seitlich an den Bandkanten anliegende Messrollen mit einem Sensor ausgerüstet sind, der rechtzeitig bei der Annäherung der Rolle an die Bandkante die Annäherungsgeschwindigkeit heruntersetzt, so dass die Messrolle nicht die Bandkante beschädigt. Die Art und Weise, wie die Messrolle dabei an die Bandkante herangefahren wird, ist nicht näher beschrieben.

Die Umgebungsbedingungen bei der Breitenmessung eines Vorbandes im Bereich eines Stauchers oder einer Brammenstauchpresse sind durch hohe Temperatur, großen Zunderanfall, Kühlwasser, Dampf, starke Erschütterungen etc. gekennzeichnet. Diese Umgebungsbedingungen können zum Ausfall oder zu Messfehlem bei den herkömmlichen Messprinzipien führen, da sich beispielsweise auf Kameras und Fotozellen Zunder, Wasser usw. absetzen kann. Starke Erschütterungen, die durch den Produktionsprozess bedingt sind, können die Elektronik der Anlage beeinflussen bzw. beschädigen.

Dies führt zur Bevorzugung mechanischer Messsysteme, insbesondere von Messrollen. Es ist - allerdings nicht nur, aber insbesondere - in diesem Falle erforderlich, dass die Ermittlung der Breite des Metallbandes oder der Bramme in sehr dynamischer Weise erfolgen kann, d. h. die Bewegungsmöglichkeit der Sensoren in Richtung quer zur Längsrichtung des Metallbandes bzw. der

Bramme muss von Schnelligkeit geprägt sein, soll ein optimales Messergebnis erzielt werden.

Dennoch muss natürlich aufgrund der rauen Umgebungsbedingungen eine robuste Arbeitsweise der Vorrichtung sichergestellt sein.

Bei allen vorbekannten Lösungen sind diesbezüglich Einschränkungen zu machen.

Der Erfindung liegt daher die Aufgabe zugrunde, eine Vorrichtung der eingangs genannten Art so weiterzubilden, dass die genannten Nachteile vermieden oder zumindest reduziert werden. Die Vorrichtung zum Messen der Breite und/oder der Bandlage eines Metallbandes soll sehr robust und hochdynamisch arbeiten und unempfindlich gegen Umgebungsbedingungen sein.

Diese Aufgabe wird erfindungsgemäß , wie in Anspruch 1 definiert, dadurch gelöst, dass der Sensor in Form einer Tastrolle auf einem schwenkbaren Tragarm des Bewegungselements angeordnet ist, wobei die Schwenkachse in Richtung der Normalen auf das Metallband bzw. auf die Bramme weist, wobei mindestens ein Linear-Aktuator vorgesehen ist, der den Tragarm bewegt, und wobei der Sensor mit einer regelbaren Kraft an das Metallband gepresst wird. Dabei kann das Bewegungselement ein Linearschlitten sein. Eine Alternative sieht vor, dass das Bewegungselement ein Teil einer Walzvorrichtung ist, insbesondere ein Seitenführungslineal für das Metallband bzw. die Bramme.

Mit der vorgeschlagenen Lösung wird eine besonders dynamische Positionierung des Sensors ermöglicht, der bei vorbekannten Lösungen nicht zu finden ist.

Der Sensor ist mechanisch ausgebildet. Er ist eine Tastrolle, die zur Anlage an die seitliche Kante des Metallbandes bzw. der Bramme ausgebildet ist. Die Tastrolle kann dabei als mindestens eine Scheibe ausgebildet sein, die einen Durchmesser aufweist, der wesentlich größer als ihre Breite ist. Mehrere Scheiben können in axialer Richtung aufeinander folgend angeordnet sein.

Weiterhin kann zusätzlich zu der mindestens einen Scheibe mindestens eine konisch ausgebildete Scheibe in axialer Richtung folgend angeordnet sein. Die Tastrolle kann dabei eine Beschichtung aus wärmebeständigem und/oder verschleißfestem Material aufweisen.

Der Sensor kann in Ausführungen die nicht unter die Erfindung Fallen, auch ein berührungsloses Messgerät sein. In diesem Falle ist bevorzugt vorgesehen, dass das berührungslose Messgerät ein optisches Messgerät, insbesondere ein Scanner, ist.

Ferner können Messmittel vorgesehen werden, mit denen die translatorische Verschiebebewegung des Bewegungselements und ggf. der Schwenkwinkel des Tragarms gemessen werden können.

Vorzugsweise ist die beschriebene Vorrichtung Bestandteil einer Brammengießanlage, einer Warmbandstraße, eines Kaltwalzwerks, einer Drahtstraße, einer Profilstraße, einer Grobblechstraße, einer Adjustage, einer Knüppelstraße oder einer Längsteilanlage.

Die vorgeschlagene Vorrichtung ermöglicht eine robuste, den Umgebungsbedingungen angepasste sowie ausreichend genaue Messung der Breite bzw. der Bandlage eines Metallbandes bzw. einer Bramme. Die Messvorrichtung kann im Vorstraßenbereich einer Warmbandstraße, aber auch in allen anderen Bereichen eingesetzt werden, wo die Breite eines Metallbandes - unabhängig von der Banddicke, der Bandlaufrichtung (im Falle des Reversierbetriebs) und der Temperatur - gemessen werden soll.

In der Zeichnung sind Ausführungsbeispiele der Erfindung dargestellt. Es zeigen:
- Fig. 1: die Draufsicht auf eine Walzanlage, in der eine Stauchung eines Metallbandes erfolgen soll, wobei eine Vorrichtung zur Messung der Breite des Metallbandes nach einer Ausführungsform der Erfindung zum Einsatz kommt;
- Fig. 2: die Draufsicht auf die Anlage nach Figur 1, wobei lediglich ein Teil des Metallbandes und die Vorrichtung zum Messen der Bandbreite dargestellt ist;
- Fig. 3: in perspektivischer Darstellung ein Messsystem der Vorrichtung zur Breitenmessung des Metallbandes;
- Fig. 4a bis Fig. 4f: verschiedene Ausgestaltungen von Sensoren in Form einer Messrolle, die in dem Messsystem eingesetzt werden kann;
- Fig. 5: die Draufsicht auf eine Walzanlage gemäß Fig. 1, wobei eine alternative Ausführungsform dargestellt ist; und
- Fig. 6: die Draufsicht auf eine Walzanlage gemäß Fig. 1, wobei eine weitere alternative Ausführungsform dargestellt ist.

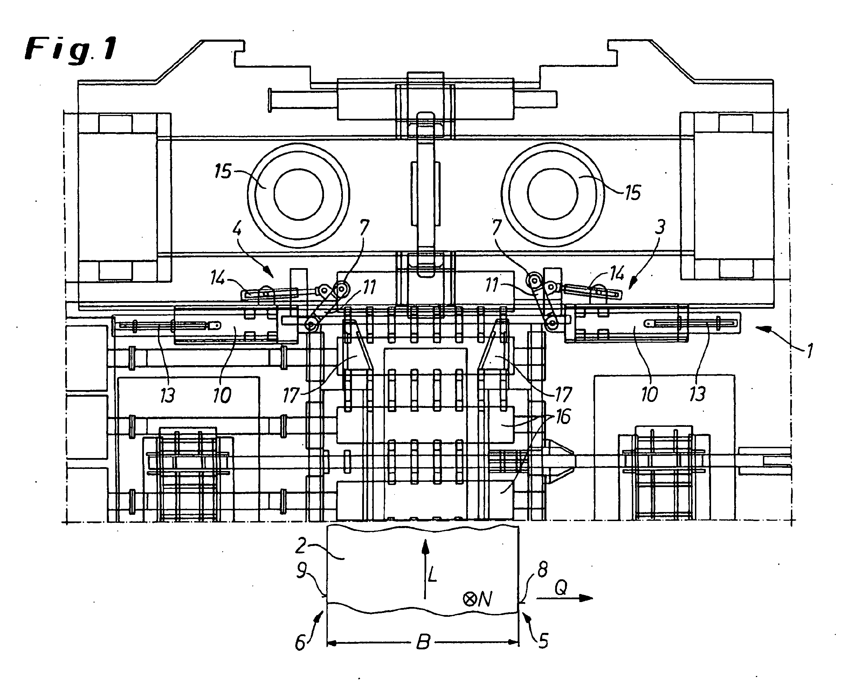

In Fig. 1 ist eine Walzanlage zu sehen, die zwei Stauchwalzen 15 aufweist, mit denen ein Metallband 2 bzw. eine Bramme in Richtung Q quer zur Längsrichtung L des Metallbandes 2 bzw. der Bramme gewalzt wird. Die Walzanlage weist einen Rollgang 16 auf, der in bekannter Weise das Metallband 2 in seine Längsrichtung L fördert. Ferner ist in bekannter Weise beidseitig des Metallbandes 2 eine Seitenführung 17 angeordnet, die das Metallband 2 auf der Anlage zentriert.

Um die Breite B des Metallbandes 2 zu bestimmen, ist eine Vorrichtung 1 zum Messen der Breite vorgesehen. Die Vorrichtung 1 besteht im wesentlichen aus zwei Messsystemen 3 und 4, wobei je ein Messsystem 3, 4 auf jeder Seite 5 bzw. 6 des Metallbandes 2 angeordnet ist. Die Messsysteme 3, 4 können die genaue Lage des seitlichen Endes 8 bzw. 9 des Metallbandes 2, d. h. die Lage der Seitenkante des Bandes, erfassen.

Hierzu ist grundsätzlich vorgesehen, dass ein Sensor 7, der nachfolgend noch näher beschrieben wird, an einem Bewegungselement 10 angeordnet ist, wobei das Bewegungselement 10 den Sensor 7 in Richtung Q verfahren kann, bis er an der Bandkante anliegt bzw. die Lage der Bandkante erfasst.

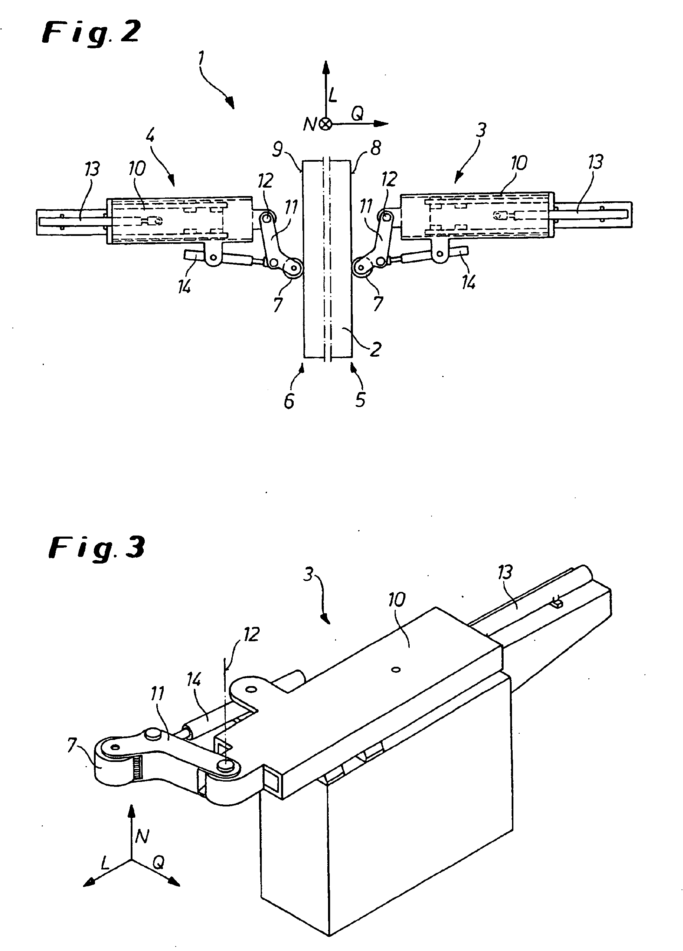

Wie in der Zusammenschau mit den Figuren 2 und 3 hervorgeht, weist ein Messsystem bevorzugt ein Bewegungselement 10 in Form einer Linearführung auf, die von einem geeigneten Linear-Aktuator 13 in Richtung Q bewegt werden kann. Auf dem Bewegungselement ist ein Tragarm 11 gelagert, der relativ zum Bewegungselement 10 um eine Schwenkachse 12 schwenken kann, die in Richtung N der Normalen des Bandes 2 weist. Am Ende des Tragarms 11 ist der Sensor 7 gelagert (in den Figuren 1 bis 3 in Form einer Tastrolle). Die Verschwenkung des Tragarms 11 relativ zum Bewegungselement 10 wird von einem weiteren Linear-Aktuator 14 bewerkstelligt.

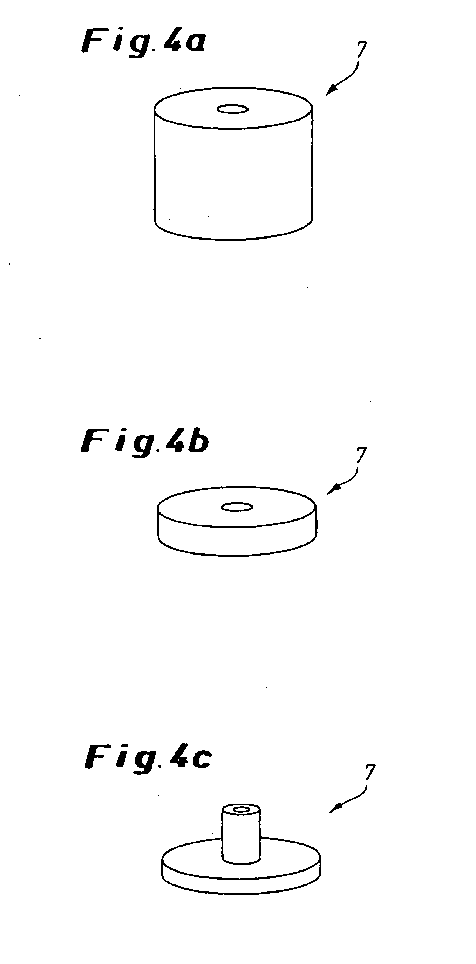

In den Figuren 4a bis 4f sind verschiedene Ausführungsforrnen des als Tastrolle ausgebildeten Sensors 7 zu sehen. Gemäß Fig. 4a kann eine klassische Rolle als Sensor zum Einsatz kommen. Die Figuren 4b und 4c zeigen scheibenartig ausgebildete Rollen 7.

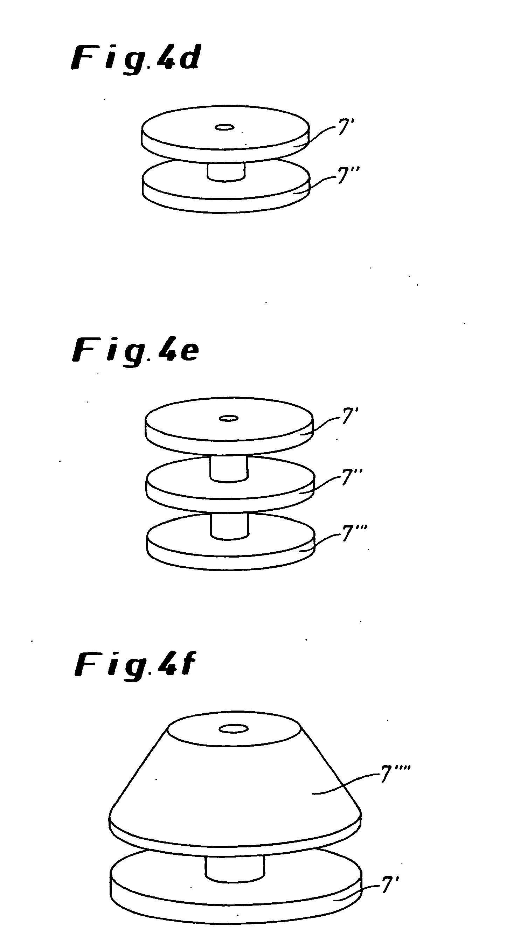

Vorgesehen kann auch sein, dass mehrere Scheiben 7', 7" und 7"' zum Einsatz kommen, die eine gemeinsame Achse aufweisen (s. Fig. 4d und 4e).

Endseitig kann auch eine konisch ausgebildete Scheibe 7"" vorgesehen sein, wie es aus Fig. 4f hervorgeht.

Die Tastrolle kann als Vollrolle ausgebildet sein oder als drehbare Scheibe, d. h. der Durchmesser ist dann wesentlich größer als die Breite. Die Tastrolle 7 kann weiterhin aus mehreren Scheiben bestehen, die übereinander in festgelegten Abständen angeordnet sind. Die Rollenform und die Rollenanordnung kann so gewählt werden, dass bei einer zu erwartenden Skibildung am Metallbandkopf (Bramme) und/oder Metallbandende die Rolle ausweichen kann bzw. es zu keiner Beschädigung der Einrichtung kommt. Bevorzugt ist die Tastrolle mit einer wärmebeständigen und verschleißfesten Schutzschicht versehen.

Die Breitenmessvorrichtung 1 tastet das Metallband 2 an beiden Kanten 8, 9 mittels der Tastrolle bzw. Tastrollen 7, 7', 7", 7"' ab; eingesetzt werden kann aber auch ein berührungsloses Wegmesssystem.

Wie erläutert ist, die Tastrolle 7, um sie an das Metallband 2 zu führen, in einem trägheitsarmen und drehbaren Rahmen in Form des Tragarms 11 gelagert. Der Drehpunkt 12 des Tragarms 11 ist auf dem translatorisch bewegbaren Schlitten in Form des Bewegungselements 10 angeordnet. Beide Bauteile, d. h. das Bewegungselement 10 und der Tragarm 11, können mit je einem Hydraulikzylinder 13, 14 bewegt werden.

Das auch als Schlitten zu bezeichnende Bewegungselement 10 kann mit Hilfe von Gleit- oder Rollführungen bewegt werden, die spielarm oder spielfrei einstellbar sind. Dies gilt auch für die Lagerung des Tragarms 11, der als Rahmen ausgebildet sein kann. Der Zylinder 13 für den Antrieb des Schlittens 10 ist so angeordnet, dass der den Schlitten 10 parallel zu der Führung bewegt und vorzugsweise in der/den Mittelebenen des Schlittens 10 wirksam ist. Für den Antrieb des Rahmens 11 ist der zweite Zylinder 14 vorzugsweise seitlich am Schlitten 10 montiert. Der Zylinder 14 greift am Rahmen 11 an und kann diesen und somit auch die Tastrolle 7 auf einem bestimmten Kreisbogen bewegen. Beide Zylinder 13, 14 können mit einem Wegmesssystem (Wegmesser, der den Zylinderhub misst) versehen sein. Die Wegmessung kann innerhalb oder außerhalb der Zylinder 13, 14 an geeigneter Stelle erfolgen (nicht dargestellt). Weiterhin ist es möglich, die Position des Rahmens 11 mittels eines Winkelgebers zu bestimmen.

Es besteht auch die Möglichkeit, eine Tastrolle 7 direkt auf dem Schlitten 10 anzuordnen, d. h. ohne schwenkbaren Rahmen 11, der die Tastrolle 7 trägt, was jedoch nicht Gegenstand der Erfindung ist. In diesem Fall ist die Tastrolle 7 am Schlitten 10 montiert und wird mit diesem direkt an das Metallband 2 geführt. Der Schlitten 10 ist in jedem Fall mit einer optimierten Geometrie versehen, um einen großen Verformungswiderstand in den zu erwartenden Belastungsrichtungen zu bieten. Die gegebene hohe Steifigkeit ist die Voraussetzung für eine gute Messgenauigkeit.

Da die Breite B des Metallbandes 2 geometrisch eine Strecke darstellt und diese durch zwei Punkte definiert werden muss, muss ein Abtasten des Metallbandes 2 von den beiden Seiten 8, 9 aus erfolgen. Zu diesem Zweck ist die beschriebene Vorrichtung 1 auf beiden Seiten 5, 6 des Metallbandes 2 so angeordnet, dass die Mittelachsen der Schlitten 10 fluchten. Beide Messsysteme 3, 4 bilden die Vorrichtung 1 zum Messen der Breite B des Metallbandes 1.

Da die Metallbänder 2 zwischen einer minimalen und einer maximalen Breite schwanken, ist es nicht erforderlich, dass die Tastrollen 7 sich zwecks Kalibrierung an einer gedachten Mittelebene berühren müssen. Die Tastrollen 7 müssen nur soweit an die minimale Bandbreite herangeführt werden, dass ein sicherer Kontakt mit dem Metallband 2 bzw. mit den Bandkanten 8, 9 möglich wird. Nutzt man zum Kalibrieren ein Prüfstück mit einem definierten Maß, welches die Rollen 7 anfahren können, so ist es möglich, den Abstand der Tastrollen 7 zueinander mit Hilfe der integrierten Weggeber genau zu bestimmen. Mit Hilfe dieses Prüfstückes kann die theoretische Mitte zwischen beiden Tastrollen 7 bestimmt werden. Sollten zum Messen der Bandbreite B die Tastrollen 7 auf einer gedachten kürzesten Verbindungslinie der Punkte, an denen die beiden Messrollen 7 das Band 2 berühren, keinen rechten Winkel mit einer theoretischen Mittelebene bilden, so kann durch zeitliches Abstimmen der gespeicherten Messwerte im Abgleich mit der Bandgeschwindigkeit die Rechtwinkligkeit der gedachten Verbindungslinie durch einen geeigneten und fachmännisch auszuwählenden Algorithmus wieder hergestellt werden.

Die Kraft, mit der die Tastrolle 7 an das Metallband 2 gepresst wird, ist regelbar. Diese Regelbarkeit ist dann von Vorteil, wenn zum Beispiel die Breite B von dünnen Bändern 2 gemessen werden soll. Hier kann eine geringe Kraft eingestellt werden, um die Bandkanten vor Beschädigung zu schützen bzw. ein Beulen des Metallbandes 2 zu vermeiden. Es ist auch möglich einen Kraftgrenzwert vorzugeben, bei dem die Rolle 7 vom Metallband 2 wegfährt, um die Rolle 7 vor Schlägen bzw. Stößen durch das Metallband 2 zu schützen. Ein solcher Fall kann z. B. in der Vorstraße einer Warmbandstraße auftreten, wenn die Bandform abweicht oder der Bandlauf nicht in der gewünschten Weise erfolgt und eventuell vor eine Tastrolle 7 stößt.

Die Kombination von Schlitten 10 und drehbarem Rahmen 11 hat den Vorteil, dass die Tastrolle 7 über den Schlitten 10 vorpositioniert und dann nur mit dem Rahmen 11 bewegt werden kann. Ein weiterer Vorteil der Drehgelenkkonstruktion ist die geringe Reibung. Die geringe Reibung begünstigt die hohe Dynamik der Tastrolle 7. Außerdem arbeitet die Kraftregelung hierdurch in einer kleineren Hysterese und ist somit von hoher Qualität.

Die Tastrolle 7 kann dann mit hoher Dynamik an das Metallband 2 geführt werden. Diese hohe Dynamik wird dadurch erreicht, dass die Rolle 7 über einen optimierten und damit kurzen und massearmen Rahmen 11 bewegt wird. Diese trägheitsarme Konstruktion hat somit den Vorteil, dass sie bei einer großen Bandgeschwindigkeit den Unebenheiten der Bandkante folgen kann und damit eine Messung ermöglicht. Andererseits ist aber auch ein schnelles Ausweichen bei starken Stößen bzw. Störungen möglich.

Ein Scanner, welcher ein geeignetes Wegmesssystem im Falle einer berührungslosen Wegmessung ist, jedoch hier nicht Gegenstand der Erfindung ist, ist auf dem translatorisch bewegbaren Schlitten 10 angeordnet, der mit einer Verfahrvorrichtung bewegt und positioniert wird. Ein integriertes Wegmesssystem übermittelt auch hier die Position des Schlittens 10. Der Schlitten 10 kann mit Hilfe von Gleit- oder Rollführungen geführt werden, die spielarm bzw. spielfrei einstellbar sind.

Der Antrieb des Schlittens 10 ist auch hier so angeordnet, dass dieser den Schlitten 10 parallel zu der Führung bewegt. Eine hohe Steifigkeit des Schlittens 10 und der Führungen ist auch hier die Voraussetzung für eine hohe Messgenauigkeit.

Auch im Falle der berührungslosen Messung muss natürlich das Abtasten des Bandes 2 von beiden Seiten 5, 6 aus erfolgen. Zu diesem Zweck ist die oben beschriebene Messeinrichtung auf beiden Seiten des Bandes 2 so angeordnet, dass die Mittelachsen der Schlitten 10 und dadurch auch die Mittelachsen der Scanner genau fluchten.

Die Kalibrierung der Messeinrichtungen erfolgt mit einer Kalibriervorrichtung. Mit dieser Kalibriervorrichtung wird die Messeinrichtung auf die theoretische Bandmitte eingestellt. Dies ist erforderlich, da das zu messende Band relativ zur theoretischen Mitte geführt wird.

Da die Metallbänder zwischen einer minimalen und einer maximalen Breite schwanken, ist es erforderlich, die Scanner mit dem Schlitten 10 auf eine voreingestellte Lage in Abhängigkeit der theoretischen Bandbreite vorzupositionieren, um die Scanner in einem vordefinierten, optimalen Messbereich zur Bandkante 8, 9 zu stellen.

Die Lage der Schlitten 10 ermittelt sich aus der theoretischen Bandbreite, der möglichen Mittenabweichung des Bandes, der Breitentoleranz und dem optimalen Messbereich der Scanner.

Der notwendige Messbereich der Scanner definiert sich durch die mögliche Toleranz der Bandbreite B plus einer möglichen Aussermittigkeit des Bandes 2. Die Bandbreite berechnet sich aus der Position der beiden Schlitten 10 zueinander plus den Messergebnissen der beiden Scanner 7.

Im Gegensatz zu vorbekannten Lösungen ist die Messrichtung von vertikal in horizontal geändert.

Die Messsysteme 3, 4 können freistehend sein, d.h. sie sind rechts und links neben dem Rollgang 16 oder einer entsprechenden Transporteinrichtung angeordnet und es existieren in der näheren Umgebung keine weiteren Einrichtungen. Die Messeinrichtungen könnten auch zwischen Seitenführung 17 und Vorgerüst bzw. vor dem Staucher angeordnet sein. Diese Lösung ist in Fig. 1 zu sehen.

Die Messsysteme 3, 4 könnten vor bzw. hinter den Seitenführung 17 stehen (bezogen auf die Walzrichtung).

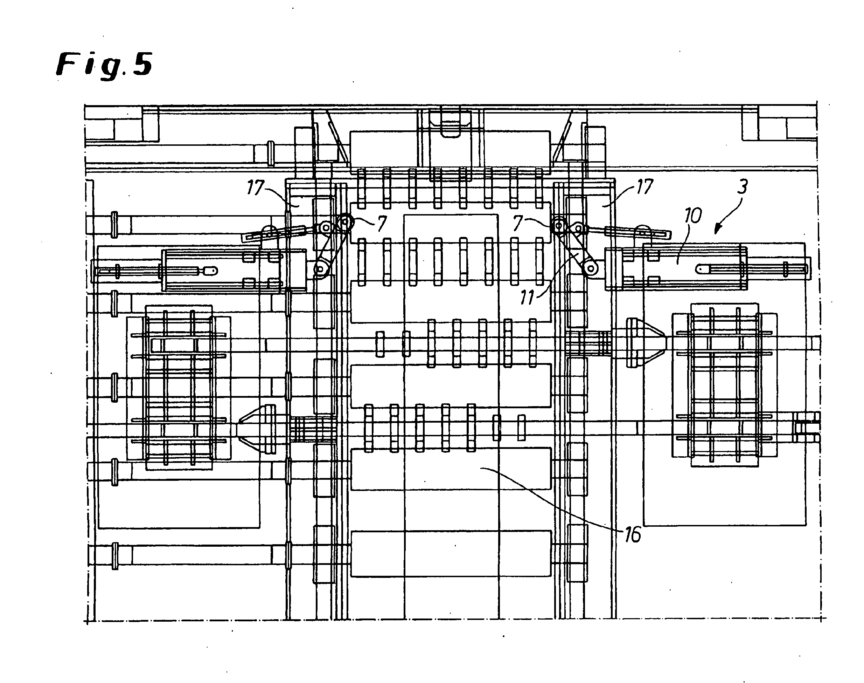

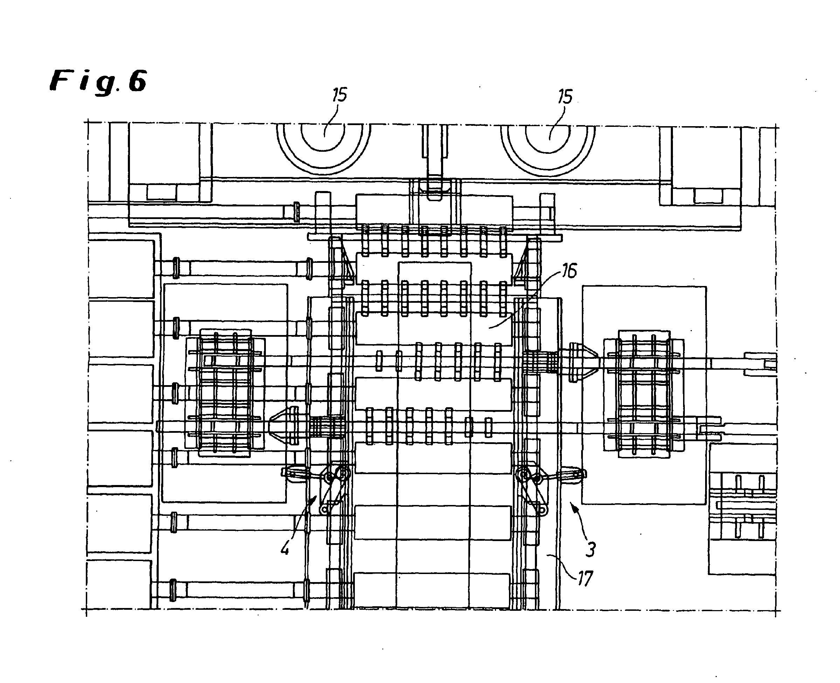

Nach alternativen Ausgestaltungen sind die Messsysteme 3, 4 in mindestens einer weiteren Maschine bzw. einem weiteren Maschineneinheit eingepasst; diesbezüglich wird auf Fig. 5 bzw. auf Fig. 6 verwiesen. So kann z. B. der Tragarm 11 mit der Tastrolle 7 in die Seitenführung 17 eines Vorgerüstes eingebaut sein. Eine translatorische Verfahreinrichtung des Schlittens 10, welche jedoch nicht Gegenstand der Erfindung ist, wäre dann nicht mehr nötig und würde funktional durch das Seitenführungslineal 17 ersetzt.

Da die Tastrollen 7 und auch der Scanner mittels einer Prüfvorrichtung auf eine theoretische Mitte ausgerichtet werden können bzw. kann, ist es möglich, durch Auswertung der Weg- und/oder Winkelmessung die tatsächliche Mitte der Bramme zur theoretischen Mitte zu bestimmen. Dies gilt analog auch für die Bandkanten.

Die ermittelten Werte können dann als Eingangsgrößen zur Steuerung oder Regelung von andern Maschinen und Anlagenteilen benutzt werden (Bandlaufregelung, kontrolliertes Schwärmen eines Metallbandes) und somit den Bandlauf und/oder Bandkantenlauf des Metallbandes lenken.

Die Messeinrichtungen können in allen Anlagen eingesetzt werden, wo Breiten sowie Höhen und Positionen von Materialien ermittelt werden müssen. Dies sind im Speziellen: Brammengießanlagen, Warmbandstraßen (Breitband, Mittelband, Schmalband), Kaltwalzwerke, Drahtstraßen, Profilstraßen, Grobblechstraßen, Adjustagen, Knüppelstraßen, Längsteilanlagen.

### Bezugszeichenliste:

| | |
|---|---|
| 1 | Vorrichtung zum Messen der Breite |
| 2 | Metallband |
| 3 | Messsystem |
| 4 | Messsystem |
| 5 | Seite des Metallbandes |
| 6 | Seite des Metallbandes |
| 7 | Sensor |
| 7' | Scheibe |
| 7" | Scheibe |
| 7"' | Scheibe |
| 7"" | konisch ausgebildete Scheibe |
| 8 | seitliches Ende des Metallbandes |
| 9 | seitliches Ende des Metallbandes |
| 10 | Bewegungselement / Schlitten |
| 11 | Tragarm / Rahmen |
| 12 | Schwenkachse |
| 13 | Linear-Aktuator |
| 14 | Linear-Aktuator |
| 15 | Stauchwalze |
| 16 | Rollgang |
| 17 | Seitenführung |
| | |
| B | Breite des Metallbandes |
| L | Längsrichtung des Metallbandes |
| Q | Richtung quer zur Längsrichtung |
| N | Normale |

## Patentansprüche

1. Vorrichtung (1) zum Messen der Breite (B) und/oder der Bandlage eines Metellbandes (2) oder einer Bramme, die mindestens zwei Messsysteme (3, 4) aufweist, von denen je eines an einer Seite (5, 6) des Metallbandes (2) oder der Bramme angeordnet ist, wobei Jedes Messsystem (3, 4) einen Sensor (7) aufweist, der zur Erfassung des seitlichen Endes (8, 9) des Metallbandes (2) oder der Bramme ausgebildet ist, wobei der Sensor (7) auf einem Bewegungselement (10) angeordnet ist, das transtatorisch in eine Richtung (Q) quer zur Längsrichtung (L) des Metallbandes (2) bewegbar ist und mindestens ein Linear-Aktuator (13) vorgesehen ist, der das Bewegungselement (10) bewegt.
**dadurch gekennzeichnet,**
**dass** der Sensor (7) in Form einer Tastrolle auf einem schwenkbaren Tragarm (11) des Bewegungselementes (10) angeordnet ist, und
der Tragarm (11) relativ zum Bewegungselement (10) um eine Schwenkachse (12) schwenken kann, die in Richtung der Normalen (N) auf das Metallband (2) bzw. auf die Bramme weist, und
mindestens ein Linear-Aktuator (14) vorgesehen ist, der den Tragarm (11) bewegt, und
**dass** der Sensor (7) mit einer regelbaren Kraft an das Metallband (2) gepresst wird.

2. Vorrichtung nach Anspruch 1,
**dadurch gekennzeichnet,**
**dass** das Bewegungselement (10) ein Linearschlitten ist.

3. Vorrichtung nach Anspruch 1,
**dadurch gekennzeichnet,**
**dass** das Bewegungselement (10) sein Tell einer Walzvorrichtung ist, insbesondere ein Seitenführungelineal für das Metallband (2) bzw. die Bramme.

4. Vorrichtung nach einem der Ansprüche 1 bis 3,
**dadurch gekennzeichnet,**
**dass** der Sensor (7) eine Tastrolle ist, die zur Anlage an eine seitliche Kante des Metallbandes (2) bzw. der Bramme ausgebildet ist.

5. Vorrichtung nach Anspruch 4,
dadurch gekenntzeichnet,
dass die Tastrolle (7) als mindestens eine Scheibe ausgebildet ist, die einen Durchmesser aufweist, der wesentlich größer als die Breite ist.

6. Vorrichtung nach Anspruch 5,
**dadurch gekennzeichnet,**
**dass** mehrere Scheiben (7', 7", 7'") in axialer Richtung aufeinander folgend angeordnet sind.

7. Vorrichtung nach Anspruch 5 oder 6,
**dadurch gekennzeichnet.**
**dass** zu der mindestens einen Scheibe (7, 7'. 7", 7'") mindestens eine konisch ausgebildete Scheibe (7"") in axialer Richtung folgend angeordnet ist.

8. Vorrichtung nach einem der Ansprüche 4 oder 7,
dadurch gekennzelchnet,
dass die Tastrolle (7) eine Beachichtung sus wärmebeständigem und/oder verschleißfestern Material aufweist.

9. Vorrichtung nach einem der Ansprüche 1 bis 8,
dadurch gekennzeichet,
dass Mesemittel vorgesehen sind, mit denen die translatorische Verschiebebewegung des Bewegungselements (10) und ggf. der Schwenkwinkel des Tragarms (11) messbar ist.

10. Vorrichtung nach einem der Ansprüche 1 bis 9,
**dadurch gekennzeichnet,**
**dass** sie Bestandteil einer Brammengießenlage, einer Warmbandetraße, eines Kaltwalzwerks, einer Drahtstraße, einer Profilstraße, einer Grobblechstraβe, einer Adjustage, einer Knüppelstrβe oder einer Längsteilanlage ist.

## Claims

1. Device (1) for measuring the width (B) and/or the strip position of a metal strip (2) or a slab, which comprises at least two measuring systems (3, 4), of which each one is arranged at a respective side (5, 6) of the metal strip (2) or the slab, wherein each measuring system (3, 4) comprises a sensor (7) constructed for detecting the lateral end (8, 9) of the metal strip (2) or the slab, wherein the sensor (7) is arranged on a movement element (10) movable translationally in a direction (Q) transversely to the longitudinal direction (L) of the metal strip (2) and at least one linear actuator (13), which moves the movement element (10), is provided, **characterised in that** the sensor (7) is arranged in the form of a scanning roller on a pivotable support arm (11) of the movement element (10) and the support arm (11) can pivot relative to the movement element (10) about a pivot axis (12) pointing in the direction of the normal (N) to the metal strip (2) or the slab, and at least one linear actuator (14) which moves the support arm (11) is provided and that the sensor (7) is pressed against the metal strip (2) by a regulable force.

2. Device according to claim 1, **characterised in that** the movement element (10) is a linear slide.

3. Device according to claim 1, **characterised in that** the movement element (10) is a part of a rolling device, particularly a straight lateral guide for the metal strip (2) or the slab.

4. Device according to any one of claims 1 to 3, **characterised in that** the sensor (7) is a scanning roller constructed for bearing against a lateral edge of the metal strip (2) or the slab.

5. Device according to claim 4, **characterised in that** the scanning roller (7) is constructed as at least one disc having a diameter which is substantially larger than the width.

6. Device according to claim 5, **characterised in that** several discs (7', 7", 7"') are arranged in succession in axial direction.

7. Device according to claim 5 or 6, **characterised in that** at least one conically constructed disc (7"") is arranged to follow the at least one disc (7, 7', 7", 7"') in axial direction.

8. Device according to one of claims 4 and 7, **characterised in that** the scanning roller (7) has a coating of heat-resistant and/or wear-resistant material.

9. Device according to any one of claims 1 to 8, **characterised in that** measuring means are provided by which the translational displacing movement of the movement element (10) and optionally the pivot angle of the support arm (11) are measurable.

10. Device according to any one of claims 1 to 9, **characterised in that** it is a component of a slab casting plant, a hot strip rolling train, a cold-rolling mill, a wire rolling train, a section rolling train, a heavy plate rolling train, a finishing shop, a billet rolling train or a girder plant.

## Revendications

1. Dispositif (1) pour la mesure de la largeur (B) et/ou de la position d'un ruban métallique (2) ou d'une brame, qui présente au moins deux systèmes de mesure (3, 4) dont un est respectivement situé d'un côté (5, 6) du ruban métallique (2) ou de la brame, chaque système de mesure (3, 4) présentant un capteur (7) qui est réalisé pour enregistrer l'extrémité latérale (8, 9) du ruban métallique (2) ou de la brame, dispositif dans lequel le capteur est disposé sur un élément mobile (10) qui est à même d'effectuer un mouvement par translation dans une direction (Q) transversale par rapport à la direction longitudinale (L) du ruban métallique (2) et dans lequel on prévoit au moins un actionneur linéaire (13) qui met l'élément mobile (10) en mouvement,
**caractérisé**
**en ce que** le capteur (7) est disposé sous la forme d'un galet de détection sur un bras de support pivotant (11) de l'élément mobile (10) et le bras de support (11) est à même de pivoter par rapport à l'élément mobile (10) autour d'un axe de pivotement (12) qui est orienté dans la direction de la normale (N) vers le ruban métallique (2), respectivement vers la brame, et on prévoit au moins un actionneur linéaire (14) qui met en mouvement le bras de support (11), et
**en ce que** le capteur (7) est comprimé avec une force réglable contre le ruban métallique (2).

2. Dispositif selon la revendication 1, **caractérisé en ce que** l'élément mobile (10) est un chariot linéaire.

3. Dispositif selon la revendication 1, **caractérisé en ce que** l'élément mobile (10) représente une partie d'un laminoir, en particulier une règle de guidage latéral pour le ruban métallique (2), respectivement la brame.

4. Dispositif selon l'une quelconque des revendications 1 à 3, **caractérisé en ce que** le capteur (7) est un galet de détection qui est réalisé pour venir s'appliquer contre une arête latérale du ruban métallique (2), respectivement de la brame.

5. Dispositif selon la revendication 4, **caractérisé en ce que** le galet de détection (7) est réalisé sous la forme d'au moins un disque qui présente un diamètre qui est essentiellement supérieur à la largeur.

6. Dispositif selon la revendication 5, **caractérisé en ce que** plusieurs disques (7', 7", 7"') sont montés en succession réciproque en direction axiale.

7. Dispositif selon la revendication 5 ou 6, **caractérisé en ce que** fait directement suite en direction axiale audit au moins un disque (7', 7", 7"') au moins un disque de forme conique (7"").

8. Dispositif selon la revendication 4 ou 7, **caractérisé en ce que** le galet de détection (7) présente un revêtement constitué d'un matériau résistant à la chaleur et/ou résistant à l'usure.

9. Dispositif selon l'une quelconque des revendications 1 à 8, **caractérisé en ce qu'**on prévoit des moyens de mesure avec lesquels on peut mesurer le déplacement de l'élément mobile (10) par coulissement en translation et le cas échéant l'angle de pivotement du bras de support (11).

10. Dispositif selon l'une quelconque des revendications 1 à 9, **caractérisé en ce qu'**il représente un constituant d'une installation de coulée de brames, d'un train à bandes à chaud, d'un laminoir à froid, d'un train à fils, d'un train à profilés, d'un train à tôles fortes, d'une ligne de finition, d'un laminoir à billettes ou d'une ligne de refendage.
